# EUROPEAN PATENT APPLICATION

(11) **EP 2 461 115 A1**
(43) Date of publication of application: **06.06.2012**
(21) Application number: 11191747.2
(22) Date of filing: 02.12.2011
(51) Int. Cl.: F24J 2/04, F24J 2/52, E04D 13/158, F24J 2/46

(54) **Infrastructure with solar panels**

(30) Priority: 02.12.2010 IT MI20102230
(71) Applicant: Polo S.r.l., 23900 Lecco (IT)
(72) Inventor: Pozzi, Marco, 23900 Lecco (IT); Locatelli, Silvia, 23900 Lecco (IT)
(74) Representative: Ponzellini, Gianmarco

(57) **Abstract**

An infrastructure (1) comprising: a building (2) having a room (5) comprising a predetermined number of walls (6) which separate an internal environment from an external environment; the building (2) comprises a roof (7) exhibiting an upper surface (8) facing towards the outside environment and a lower surface (9) facing towards the room (5) and a predetermined number of solar panels (3); the solar panels (3) are arranged in proximity of the roof (7) and the constraint system (4) of each of the solar panels (3) is configured such as to enable the solar panels (3) to be arranged in a first operating condition in which the panel (3) is exposed such as to receive the solar radiation, or be arranged in a second rest condition in which the panel (3) is at least partially protected and cannot receive the solar radiation.

## Description

### FIELD OF THE INVENTION

The following invention relates to an infrastructure equipped with solar panels, both thermal and/or photovoltaic. The following invention is applicable in any new or old building which requires a system for production of heat and/or electrical energy by means of solar panels.

### BACKGROUND ART

As is known, nowadays there is a growing production of heat or electrical energy by means of the capturing and eventual conversion of solar energy. There are various structures and means used for the aim by seeking to obtain maximum performance and duration of the panels.

The performance of the panels in general is connected to the structure and the intrinsic nature thereof, and their correct exposure to solar radiation.

The maximising of the working life of the panel is obviously also connected to the structure of the panel in terms of resistance, for example to the atmospheric agents and is also connected to the correct maintaining of the solar plant.

From the point of view of the maximising of the working life, there have been various examples in the literature which illustrate systems or methodologies for protecting solar panels from the atmospheric agents which constitute one of the main causes of the functional degradation of the plants.

An example of a structure able to at least partially prevent damage to the panels when it is raining, hailing or snowing (reference is made to patent document CN 101640225) uses a special movement system, developed for this purpose. The solar panels made using this documents are connected to a support frame by means of pins which enable support and rotation thereof with respect to a horizontal axis; further, the panels are also connected in series with one another by special command bars. The movement of the bars leads to the simultaneous rotation with respect to the support frame of all the solar panels constrained to the command bar; the panels thus rotate simultaneously in the same direction. By gradually inclining the active surface of each of the panels it is possible to bring it from a flat condition in which typically the maximum solar radiation is absorbed, to a substantially vertical position where, in case of need, the panels undergo a lower degree of degradation by effect of the atmospheric agents such as rain, snow or hail. The described solution is simple to apply but is not able to completely protect the panels, which in any case remain exposed to the external environment and consequently are subject to a reduction in working life and performance.

Further, the type of movement mentioned above requires large occupation of space in the vertical sense, and actuators for moving which are rather unwieldy, not to mention a control system that is rather complex.

A second example of solar plant protection systems is described in document EP 1818626, which comprises installation of an additional device coupled to the plant for selective protection of the solar panels. The protection system comprises two rotating sleeves having horizontal axes arranged at opposite sides of the solar panel to which a flexible tarpaulin is coupled, which can wind on or unwind from the sleeves. The activating of the protection system commands the winding or unwinding of the tarpaulin which covers or uncovers the solar panel, according to requirements. As is immediately clear, the described solution requires the predisposing of a movement system and an additional protection system with a consequent increase in installation and maintenance costs.

The described solution does not effectively protect the panel from situations in which the snow which might deposit on the laminar protection element were too heavy and such that the movement of the tarpaulin by means of the sleeves were made impossible and not effective even in situations, vice versa, in which the flexible element should slide relatively to the snow which is found thereon without dragging it (icy snow or wet snow, for example).

In this situation there would be a considerable loss of efficiency as, while covered with snow, the panels could not produce energy, even on sunny days.

A third example of panel protection systems, with particular reference to document DE 2603811, is constituted by an infrastructure exhibiting photovoltaic panels which are fixable to an external wall of the building. The photovoltaic panels, given their intrinsic lightness (with respect to thermal solar panels) are connected to one another in sequence to form a bellows-folding structure which can be arranged in an operating condition of complete extension (in a substantially flat configuration) such as to receive the solar radiation.

Alternatively the panels can be arranged in a closed condition in which the structure folds on itself such as to define a compact body resting on the lateral wall of the building infrastructure. This third example is suitable for being constrained to a lateral wall of the building that is only partially protected from weather conditions and further requires an additional support structure able to support the solar panels in the condition of maximum extension as they project with respect to the wall of the infrastructure. The addition of a support structure has an effect on the plant and installation costs, apart from being difficult to apply in a case of thermal solar panels.

A further important consideration relates to the aesthetic impact of the whole system which is visually invasive.

Document WO 2010/099596 describes an infrastructure in which solar panels can be moved between an extracted condition in which they receive the solar radiation and a retracted condition in which they are protected, being internal of the building structure. The illustrated configuration shows the need for structural interventions on the walls of the building such as to create the suitable seatings for receiving the movement mechanisms and the panels when retracted.

Further, the described panels can be not only translated along the development plane thereof but also rotated about respective axes with the aim of orientating and following the solar radiation.

A further example of document US 4459973 concerns an infrastructure provided with a extended single thermal solar panel which is suitable for sliding up to inside the floor of the building, being interposed between two planes of the dwelling to occupy substantially the whole volume in plan view. In particular, the panel can be moved from the inside of the infrastructure to the outside, where it receives the solar radiation, and then retracted to release heat to the building.

The object of the invention requires a dedicated and rather large housing in terms of volume occupied internally of the infrastructure into which the panel can be retracted. In this embodiment too it is necessary to provide the mobile panel with a support structure able to support it in its operating position of complete extraction. The work position is completely projecting with respect to the walls of the infrastructures and consequently requires a structural support.

When retracted internally of the structure of the dwelling, the panel passively releases, by radiation, the head accumulated during the day, and thus contributed to heating the plane to which it is inferiorly associated. The installation of the mobile panel, given its dimensions, its structure and its use, must be provided during design stage, as it is substantially impossible, given the costs of setting up, to intervene on a building that has already been built and which is not predisposed for housing thereof in order to set up the system.

Apart from incurring very high costs, the possibility of implementing the device that is summarily described above is linked to the presence of the structural requisites of the building, to the presence of the necessary housing space and also to the presence of an important free external area which has to be able to receive the extracted panel and the relative support structure in use.

### AIMS OF THE INVENTION

A first aim of the present invention is to resolve one or more of the limitations and drawbacks of the preceding solutions.

An objective of the invention is to enable effectively protecting the panels in order to increase the working life thereof and guarantee efficiency thereof.

An additional aim is to provide a system that is able to increase the possibilities of exploiting solar energy in areas where there is a high precipitation of snow with respect to known systems already in use.

A further aims is to realise a low-cost plant to install and which does not require large-scale interventions on the infrastructure.

In an auxiliary objective the proposed system can have a small aesthetic impact, as well as offering a simple and rapid setting-up.

### SUMMARY

One or more of the set aims are substantially attained by an infrastructure according to one or more of the claims.

Further aspects of the invention are listed herein below.

A first independent aspect concerns an infrastructure comprising: a building, having at least a room comprising a number of walls which separate an internal environment from an external environment, at least a roof exhibiting an upper surface facing towards the external environment and a lower surface facing towards the room; a predetermined number of solar panels; a constraining system for each solar panel for constraining the solar panels to the building.

In a second aspect, according to the first aspect, the solar panels are arranged in proximity of the roof, the constraining system of each of the solar panels being configured such as to enable movement of the solar panels with the aim of enabling the solar panels at least to be arranged in a first operating condition in which the panel is exposed such as to receive solar radiation, and to be arranged in a second rest condition, in which the solar panel is at least partly protected, the solar panel arranged in the second condition not being able to receive the solar radiation.

In a 3rd aspect, according to any one of the preceding aspects, the solar panels are arranged in proximity of the lower surface of the roof.

In a 4th aspect, according to any one of the preceding aspects, the constraining system of each of the solar panels is configured such as to enable the solar panels to take on an operating working position in which the panel projects from the roof and takes on a rest position in which the solar panel is at least partially protected by the roof.

In a 5th aspect, according to any one of the preceding aspects, the solar panels, in the rest position, are contained internally of the vertical volume of the roof.

In a 6th aspect, according to any one of the preceding aspects, the roof, seen from above, exhibits a substantially polygonal profile.

In a 7th aspect, according to the 6th aspect, a predetermined number of the solar panels is aligned on at least a side of the profile.

In an 8th aspect, according to the 6th or 7th aspect, a predetermined number of solar panels, in operating condition, projects on at least a side of the profile flanked to one another in such a way as to be aligned in use.

In a 9th aspect, according to any one of the preceding aspects, the infrastructure comprises at least a circuit in communication with the solar panels, the circuit being destined to collect a part of energy absorbed by the solar panels and to transfer it to at least a user.

In a 10th aspect, according to the 9th aspect, the infrastructure comprises at least an energy transfer device arranged on the circuit.

In an 11th aspect, according to the 10th aspect, the energy transfer device is configured such as to receive the energy produced by the solar panel.

In a 12th aspect, according to the 10th or 11th aspect, the energy transfer device is further configured such as to transfer a part of the solar energy absorbed by the panels and to send it to a predetermined number of users.

In a 13th aspect, according to any one of the preceding aspects, the solar panels are thermal solar panels.

In a 14th aspect, according to aspects from 9 to 13, the circuit is a hydraulic circuit which set the thermal solar panels in fluid communication with the energy transfer device and the users.

In a 15th aspect, according to aspects from 10 to 14, the energy transfer device is a heat exchanger configured such as to receive the thermal energy produced by the solar panels.

In a 16th aspect, according to any one of the preceding aspects, the infrastructure comprises at least a pump configured to circulate the fluid internally of the circuit.

In a 17th aspect, according to aspects from 1 to 12, the solar panels are photovoltaic solar panels.

In an 18th aspect, according to the 17th aspect and aspects from 10 to 12, the circuit connects the photovoltaic panels with the energy transfer device and the users.

In a 19th aspect, according to the 18th aspect, the energy transfer device is an inverter configured such as to convert the direct current produced by the photovoltaic solar panels into an alternating current to be sent to the users or the energy transfer device is a battery for accumulating the energy products for the purposes of a subsequent re-use.

In a 20th aspect, according to any one of the preceding aspects, the solar panels are configured such as to pass from the first operating working condition to the second rest condition and vice-versa by means of a translation.

In a 21st aspect, according to the 20th aspect, the translation of the solar panels exhibits a translation direction which is substantially parallel to the inclination of the roof.

In a 22nd aspect, according to any one of the preceding aspects, the constraint system comprises at least a movement device.

In a 23rd aspect, according to the 22nd aspect, the movement device comprises at least an actuator acting on the solar panel, the actuator enabling the movement of the solar panels.

Ina 24th aspect, according to the 23rd aspect, the actuator of the movement device is an electric, hydraulic or pneumatic actuator.

In a 25th aspect, according to the 24th aspect, the infrastructure comprises a plurality of electric, hydraulic or pneumatic actuators.

In a 26th aspect, according to the 25th aspect, the infrastructure exhibits an actuator that is for example electrical, one for each solar panel.

In a 27th aspect, according to any one of the preceding aspects, the constraint system comprises at least a guide which enables guiding the solar panels from the operating position to the rest position and vice versa.

In a 28th aspect, according to the 27th aspect, the infrastructure comprises a plurality of guides, at least one for each solar panel.

In a 29th aspect, according to the 27th or 28th aspect, the solar panel is engaged to at least a pair of guides.

In a 30th aspect, according to the 29th aspect, the guides are substantially parallel to one another, acting on two respective opposite sides of the solar panel.

In a 31st aspect, according to aspects 27 or 28 or 29 or 30, the guide is substantially fixed with respect to the lower surface of the roof.

In a 32nd aspect, according to aspects from 27 to 31, the guide is substantially parallel to the development direction of the roof.

In a 33rd aspect, according to any one of the preceding aspects, the infrastructure comprises a control unit.

In a 34th aspect, according to the 33rd aspect, the control unit is connected to the electric actuator and configured such as to activate the electric actuator.

In a 35th aspect, according to aspects 33 and 34, the control unit is configured such as to enable the programmability of the movement of the solar panels.

In a 36th aspect, according to aspect 35, the control device enables programming a time that the solar panels remain in the operating working condition.

In a 37th aspect, according to any one of the preceding aspects, the infrastructure comprises at least a sensor.

In a 38th aspect, according to aspect 37, the sensor is configured such as to automatically emit a control signal.

In a 39th aspect, according to the 37th aspect, the command signal determines the displacement of the solar panels into the various operating conditions of work and rest.

### BRIEF DESCRIPTION OF THE DRAWINGS

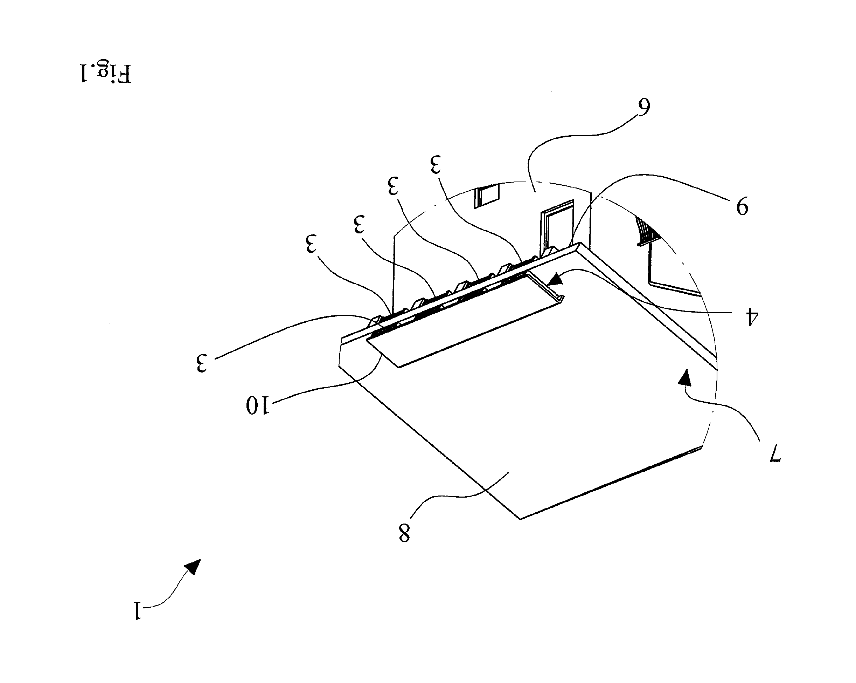

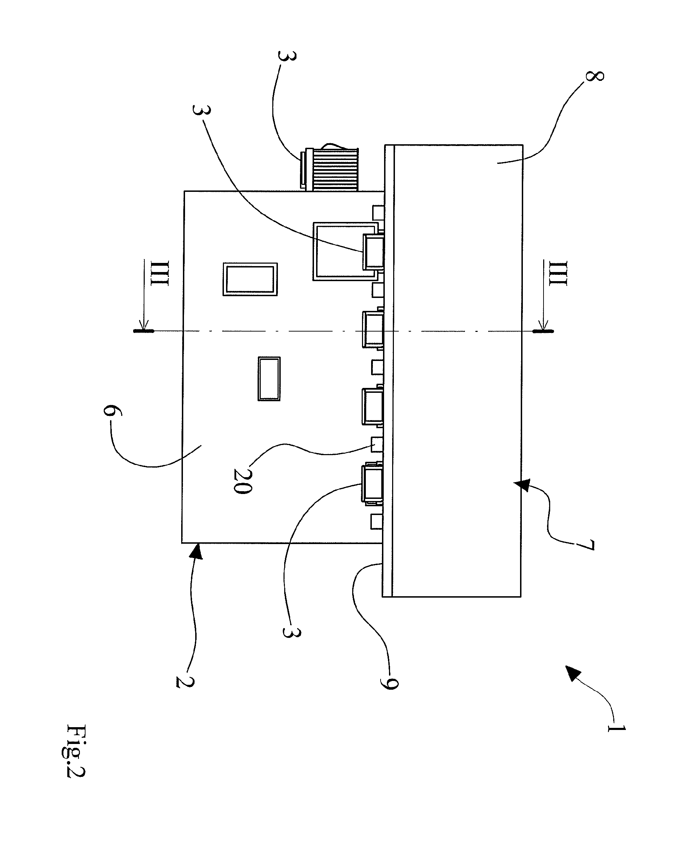

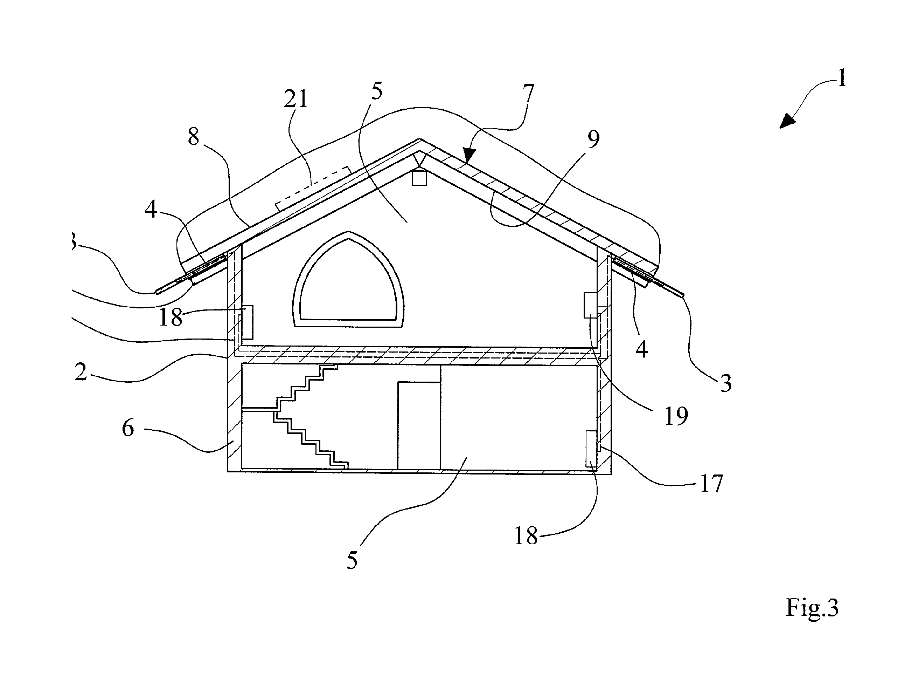

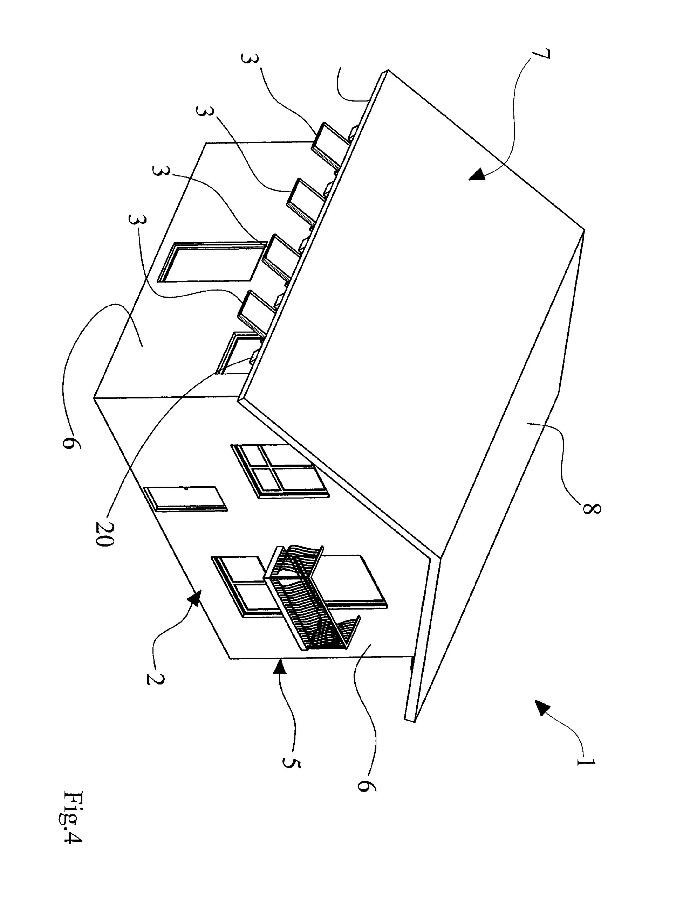

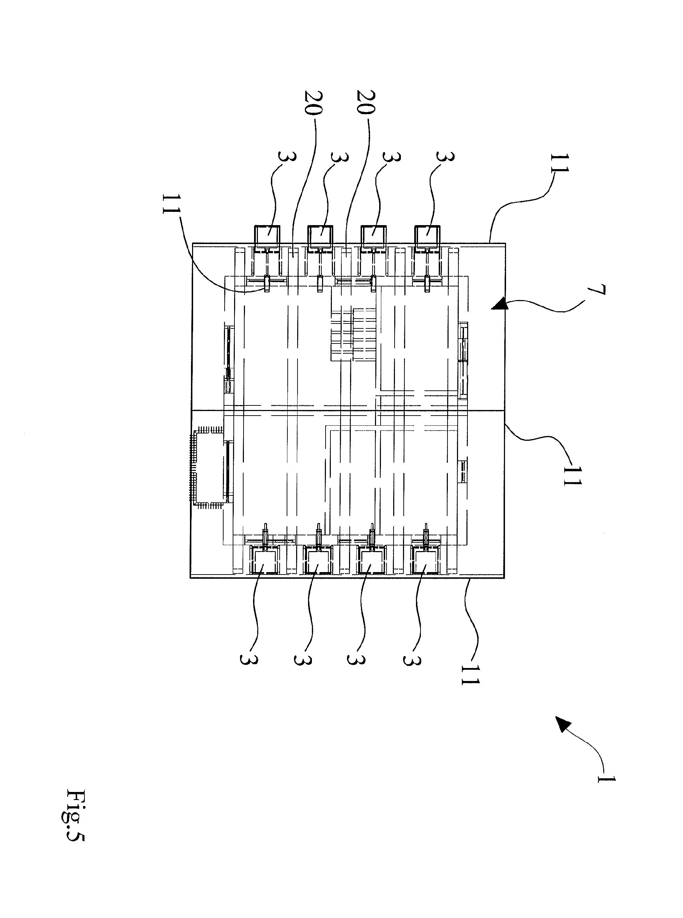

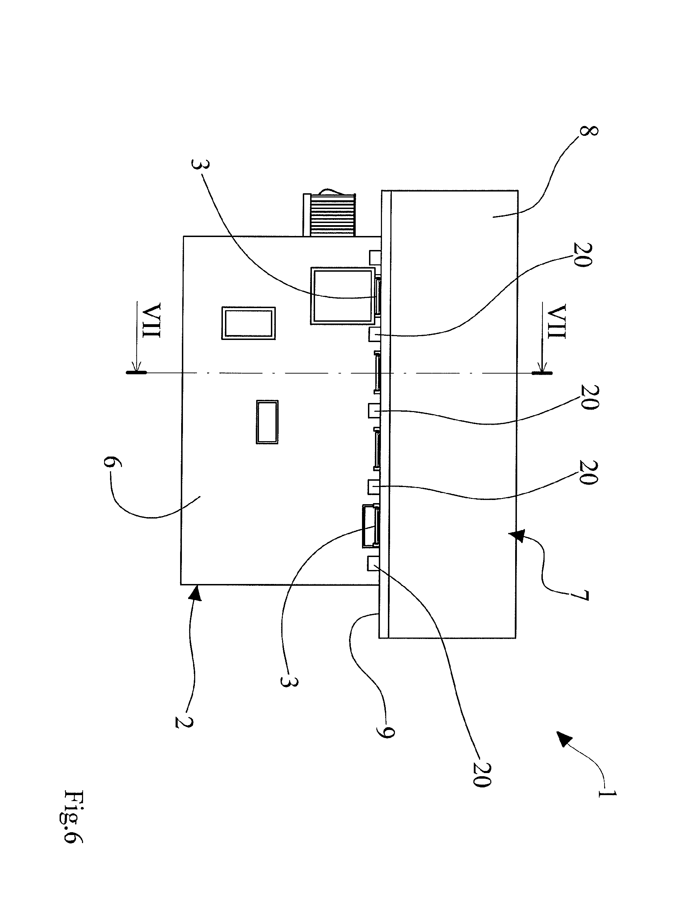

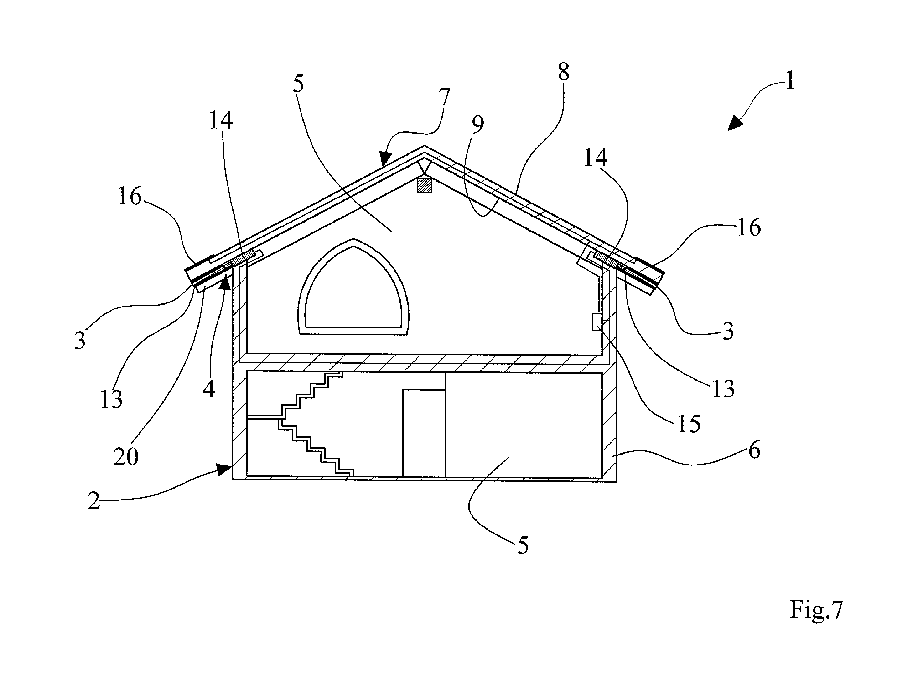

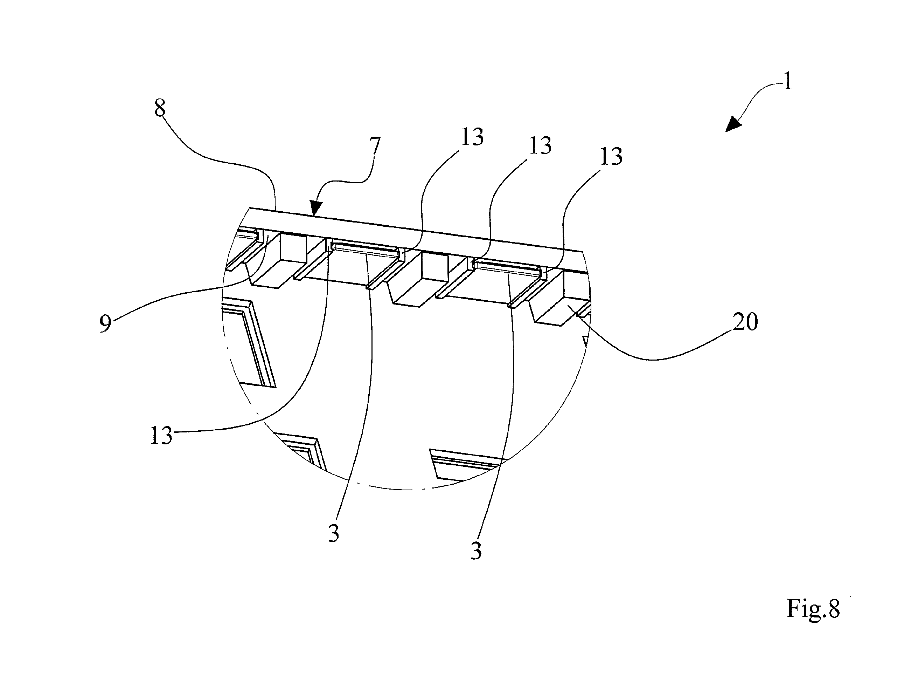

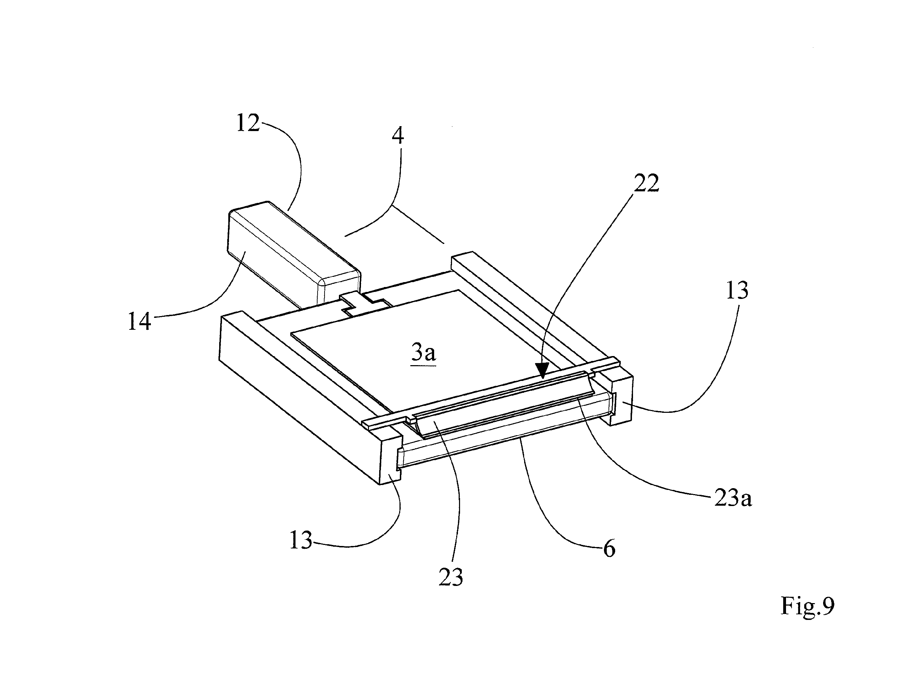

Some embodiments and some aspects of the invention will be described herein below with reference to the accompanying drawings, which are provided by way of non-limiting example, in which:
➢ figure 1 is a perspective view of the infrastructure comprising two possible alternative embodiments of the invention;
➢ figure 2 is a lateral view of the infrastructure which illustrates the first and a further possible embodiment of the invention;
➢ figure 3 is a transversal section of the infrastructure of figure 2;
➢ figure 4 is a perspective view of the infrastructure according to the first embodiment, with panels in the working condition;
➢ figure 5 is a view from above of the infrastructure of figure 4;
➢ figure 6 is a lateral view of the infrastructure according to the first embodiment with the panels in the rest condition;
➢ figure 7 is a transversal section of the infrastructure of figure 6;
➢ figure 8 is a detail of a perspective view from below of the infrastructure according to the first embodiment;
➢ figure 9 is a perspective view of a solar panel and the respective constraint system.

### DETAILED DESCRIPTION

With reference to the accompanying figures, 1 denotes in its entirety an infrastructure comprising a building 2, such as a common dwelling, to which a predetermined number of solar panels 3 is associated by means of a suitable constraint system 4 thereof to the building structure.

The building 2 exhibits at least a room 5 which comprises a predetermined number of walls 6 which separate an internal environment of the building from an outside environment.

The building 2 exhibits a roof 7 having an upper surface 8 facing towards the external environment and a lower surface 9 facing towards the room.

As will emerge more clearly in the following, the solar panels constrained to the building will be alternatively or in combination, thermal solar panels or photovoltaic solar panels according to the requirements and needs of the user without however forsaking the inventive concept underpinning the present invention.

A peculiarity of the various embodiments described herein below relates to the particular positioning of the panels and the type of protection offered to them.

The configurations in which the solar panels 3 can be arranged with respect to the building are varied and the principal ones will be described in the following.

A first preferred embodiment, visible in figures from 1 to 8, comprises the installation of solar panels 3 in proximity of the roof 7 and in greater detail in proximity and at the lower surface 9 of the roof 7.

As figures 4 and 5 show, the panels are configurable between an extracted working position in which they are exposed to the external environment and in particular to the incident solar radiation and a retracted rest position in which they are at least partially (and in general completely) retracted below the roof 7.

In particular, in the rest position the solar panels 3 are contained internally of the vertical volume of the roof (and immediately below it) such that the roof can protect the panel from atmospheric agents.

In the view from above of the infrastructure 1 (figure 5) it can be seen how the infrastructure exhibits a profile 11 that is substantially polygonal (typically, though not necessarily rectangular) and that a plurality of solar panels 3 is arranged in proximity of the profile 11.

In general the panels 3 will have volumes in plan view that are relatively small (at least by an order of magnitude with respect to the development of the surface of the roof) such as to be housable in the spaces normally present defined between the support beams 20 of the covering. In other terms the panels 3 will be housed between two flanked beams 20, occupying the interposed free volume.

In this way it is not necessary to intervene on the roof structure during the installation stage.

It is in particular advantageous to position a predetermined number of panels on one or more sides of the profile 11 according to the exposure thereof to the school. Note that a plurality of panels can be aligned on each side of the profile which in the operating condition project external of the profile 11, flanked to one another and distanced from one another by a slightly greater interval than the section of the support beam 20.

The orientation of the panel is in general such as to be lying in a parallel plane to the development plane of the roof or in a slightly inclined plane (+/- 5°) with respect to the inclination of the roof.

The movement 4 of each of the panels 3 between the retracted position and the extracted position is guaranteed by the constraint system 4.

In the following the details of a specific and not limiting embodiment of the constraint system 4 will be described, that can be the same for all the further embodiments illustrated in the following. Firstly, the main function of the constraint system 4 is such as to enable passing from the rest position to the operating working position (and vice versa) via a translation, in particular a translation in the plane of the panel and which exhibits a movement direction that is substantially parallel to the inclination of the roof 7 (and to the development axis of the support beams 20). The constraint system 4 can simultaneously move all the panels between the positions even though optionally (and with a more complex management) it is possible to arrange a constraint system 4 which can control the movement only of a predetermined number of panels (for example only the panels situated on the same side of the profile 11 of the roof 7, or only some of the panels of a same side).

As can be noted from the accompanying figures, a constraint system 4 is preferably adopted for each solar panel 3.

As already mentioned, the constraint system 4 is configured such as to enable the solar panels 3 to be arranged in a first working condition in which the panel is exposed such as to receive the solar radiation (complete or partial projecting extraction) and to be arranged in a second rest condition in which the panel is at least partially protected, thus not being able to receive the solar radiation or in any case receiving only an extremely low percentage thereof, considerably less than in the operating condition.

As can be seen in figure 3, even where there are abundant falls of snow, the panels 3 remain covered and protected and can be extracted when it is possible to receive solar radiation even in the presence of snow which would usually prevent functioning in standard installations.

Figure 3 shows, by way of example, a standard panel 21 which is entirely unusable in the illustrated conditions.

Moving into greater detail in relation to an exemplary form of the constraint system in its main components, and as it can be seen from figures 8 and 9, the system comprises a movement device 12 and a corresponding guide 13. The movement device 12 comprises at least an actuator 14, which in particular can be represented by a pneumatic, hydraulic or electric actuator. It is clear that other embodiments and/or movement transmission systems will be possible (for example by means of an endless screw, etc.) as long as they enable reversible displacement between the rest and operating conditions.

The actuator is active on the solar panel 3 and enables movement thereof.

The guide 13, vice versa, enables guiding the solar panels 3 with precision in the displacement thereof from the operating position to the rest position.

The guide 13 is substantially fixed to the infrastructure 1, advantageously to the or at the lower surface 9 of the roof 7. The type of guide is obviously constrained to the shape of the panel and its positioning connected to the relative positions of housing and projecting extraction which are to be imposed on the panel 3; as can be seen from the figures (see also figure 9) sliding linear guides 13 are advantageously used, optionally telescopic, fixed to the or at the lower surface 9 of the roof 7. If present on the infrastructure, the guides 13 can be constrained to the support beams 20 of the roof or even optionally be fastened to the walls 6 of the building 2.

The panels engage to at least a guide 13, and in general to a pair of guides 13 that are parallel such as to obtain a precision of movement.

In agreement with the desired movement direction, the guides 13 can be arranged parallel to the inclination of the roof 7, or even arranged horizontally.

In a variant, it is possible to provide the system with a device 22 dedicated to the cleaning of the upper surface 3a of the panel, for example one which exploits the relative movement between the panel 3 and the building.

In this way, for each outward and/or inward translation of the panel, the device 22 cleans the upper surface 3a and thus maintains a better level of efficiency of the panel itself, without any need for a manual intervention, or other more complex devices.

In an extremely simple representative embodiment, the surface cleaning device 22 comprises at least a scraper 23, an active surface 23a of which is located in proximity/contact with the upper surface 3a of the panel 3.

The scraper can be constrained, for example, to the guides 13, but also it can be constrained to various parts of the building, such as the roof or the bearing structure of the building, fixed such that the movement of exit/entry of the panel from and to its seating below the head leads to an automatic scratching of the surface.

The above-described infrastructure can, in more advanced embodiments, comprise a control unit 15 provided with intelligence, which is directly connected to the constraint system 4, in particular with the actuators 14.

The control unit 15 is configured (programmed) such as to activate the actuators 14. In a more primitive embodiment the control unit 15 can be represented by a manually-activatable switch; alternatively it will be constituted by a programmable device such as a microprocessor or the like. The programmability of the control device 15 enables managing the movement of the solar panels 3 according to various functions and according to predetermined parameters.

In particular it is possible to program, using a timer, a time that the solar panels will remain in the operative working condition.

The exit and the re-entry of the panels might indeed be made automatic, by linking them to the hours of daylight of the locality they are installed in.

Obviously it will be possible to force the panels into the operating condition in accordance with the user's decisions.

Beyond the time programmability (or alternatively thereto) it is also possible to use one or more sensors 16 cabled to the controlled unit which automatically emit a control signal when certain conditions obtain.

Light or solar radiation sensors can be applied, in relation to a certain threshold level; these sensors will enable the control unit to automatically command the operating position of the panels 3.

In a case of darkness or rain, the sensor/sensors can send the corresponding signal to the CPU, which will react according to the memorised instructions.

In this way the varying of the atmospheric/environmental conditions will be accompanied by system adjustment, thus maximising the performance and protection thereof with respect to atmospheric agents.

The control signal will be provided in inlet to the control unit 15, which will determine the displacement of the solar panels 3 in the various operating conditions, working and rest.

As illustrated in figure 7, the sensors 16 can be positioned on the upper surface 8 of the roof 7. The sensors 16 can obviously be sensors of different natures, a pressure sensor for detecting any excess of loading due to snow, but also sensors which can detect the intensity of the solar radiation, or temperature sensors, moisture sensors and so on.

With reference to the solar plant in its entirety, it is noteworthy that the solar panels communicate directly with an external circuit 17 typically housed in the building, which is destined to collect the heat or electrical energy produced by the solar panels and transfer it to at least a user 18, transporting it (conveying it) along a prevalently closed pathway which can be defined by a tubing or an electrical line/cable.

The plant further comprises an energy transfer device 19 arranged on the circuit 17 and configured such as to receive the energy produced by the solar panels 3. The energy transfer device 19 is further configured such as to transfer a part of the solar energy absorbed by the panels and send it to a predetermined number of users 18 (in this sense the device can be a heat exchanger, but also an inverter or a battery).

As previously mentioned, the infrastructure can be provided with various types of solar panels, for example: thermal, photovoltaic, hybrid and thermodynamic.

There follows a description in greater detail of the circuit with solar panels of the thermal type and the circuit with photovoltaic panels.

In a case in which thermal solar panels are used, the circuit 17 will be a hydraulic circuit. The hydraulic circuit 17 sets the thermal solar panels in fluid communication with the energy transfer device 19 and the users 18. In this particular case the hydraulic circuit 17 comprises a closed primary hydraulic circuit which transfers a fluid (for example propylene glycol mixed with water, water or another fluid besides) from the panel 3 to the energy treatment device 19 (and vice versa). The energy transfer device 19 will be represented by a battery.

There will be an secondary hydraulic circuit that is independent and insulated from the primary circuit which sets the energy transfer device 19 is communication with the users 18. In particular, the second circuit comprises the accumulator where the second fluid can receive heat from the first fluid. The water can be transferred from the accumulator to the users for consumption. The plant can comprise, or not, one or more recycling pumps configured such as to force the fluid circulation internally of the circuit.

In a case in which solar panels of the photovoltaic type are used, the circuit 17 connects the photovoltaic solar panels 3 with the energy transfer device 19 and the users 18.

The circuit will be an electrical circuit destined to place the photovoltaic panels in series (or alternatively in parallel) and to transfer the current produced to the energy transfer device 19.

In the latter case the energy transfer device 19 is constituted by an inverter configured such as to convert the direct current produced by the photovoltaic solar panels 3 into an alternating current to be sent to the users, and alternatively represented by an accumulator or battery suitable for enabling the use of the energy accumulated at a later date.

The number of solar panels installed and therefore the productive capacity of the panels obviously depends on the requirements and surfaces/volumes available. In any case note that the energy capacity of four thermal solar panels having dimensions of 2 square metres is about 6.4kW considering a mean absorbed power of 880 Watt/square metre, using two accumulators each having about 300 litres capacity, with a total of 600 litres of water, which is enough to satisfy the needs of two families. In other terms, each pair of panels and each accumulator satisfies the needs of an average family. The use of four panels, as illustrated in figure 4, which exhibits an overall radiation surface of about 4 square metres, do not occupy a great space and are alone sufficient to satisfy the requirements of two families.

### LEGEND

- 1: Infrastructure
- 2: Building
- 3: Solar panels
- 4: Constraint system
- 5: Room
- 6: Walls
- 7: Roof
- 8: Upper surface
- 9: Lower surface
- 10: Covering structure
- 11: Profile
- 12: Movement device
- 13: Guide
- 14: Actuator
- 15: Control device
- 16: Sensor
- 17: Circuit
- 18: Users
- 19: Energy transfer device
- 20: Support beams

## Claims

1. An infrastructure (1), comprising:
a building (2), having:
at least a room (5) comprising a plurality of walls (6), which separate an internal environment of the building (1) from an environment external of the building,
at least a roof (7) exhibiting an upper surface (8) facing towards the external environment and a lower surface (9) facing towards the room (5),
a plurality of solar panels (3) arranged immediately below the lower surface (9) of the roof (7);
a constraint system (4) for each solar panel (3) for constraining the solar panels (3) to the
building (2), the constraint system (4) of each of the solar panels (3) being configured such as to enable the solar panels (3) to:
take on an operating position in which the solar panel (3) projects from a vertical volume of the roof (7),
take on a rest position in which the solar panel (3) is at least partially retracted with respect to the operating position and at least partially protected by the roof (7), the solar panel (3) arranged in the rest position not being able to receive the solar radiation or being able to receive it in an insignificant proportion with respect to the first operating position, the solar panels (3) being configured such as to pass from the operating position to the respect position and vice versa by means of a translation.

2. The infrastructure of the preceding claim, wherein the roof (7) comprises support beams (20) defining respective spaces, the panels (3) having a smaller plan volume and being configured such as to be housed in the spaces, in particular the panels (3) being housed between two flanked beams (20), occupying an interposed free volume.

3. The infrastructure of the preceding claim, wherein an orientation of the panel (3) is lying in a parallel plane to the development plane of the roof (7) or in a plane that is slightly inclined by +/- 5° with respect to the plane of the roof.

4. The infrastructure of any one of the preceding claims, further comprising a device (22) for cleaning a surface, for example an upper surface (3a), of the panel (3), in particular the cleaning device (22) exploiting the relative movement between the panel (3) and the building (2).

5. The infrastructure of the preceding claim, wherein the cleaning device (22) cleans the upper surface (3a) at each exiting and/or entering translation of the panel (3).

6. The infrastructure of the preceding claim, wherein the surface cleaning device (22) comprises at least a scraper (23) an active surface (23a) of which is located in proximity of/contact with the upper surface (3a) of the panel (3), in particular the scraper (23) being constrained to a guide (13) for the panel (3).

7. The infrastructure of any one of the preceding claims, wherein the translation of the solar panels (3) exhibits a translation direction that is substantially parallel to the inclination of the roof, the translation happening in the development plane of the panel (3) and for example parallel to a development axis of the support beams (20).

8. The infrastructure of any one of the preceding claims, wherein the solar panels (3), in the rest position, are contained internally of the vertical volume of the roof (7).

9. The infrastructure of any one of the preceding claims, wherein the roof (7), in a view from above, exhibits a profile (11) that is substantially polygonal, and wherein a predetermined number of the solar panels (3) is aligned on at least a side of the polygonal profile (11), a predetermined number of solar panels (3), in the operating condition, projecting from at least a side of the profile (11), in particular the solar panels (3) projecting externally of the profile (11), flanked to one another and spaced from one another by a slightly greater amount than a second a support beam (20).

10. The infrastructure of any one of the preceding claims, wherein the constraining system (4) exhibits a movement device (12) and at least a guide (13), the movement device (12) comprising at least an actuator (14), in particular an electric or hydraulic actuator, active on the solar panel (3) in order to enable a movement thereof, the guide (13) enabling guiding the solar panels (3) from the operating position to the rest position and vice versa, the guide (13) being in particular fixed with respect to the lower surface (8) of the roof (7), and still more in particular the guide (13) being substantially parallel to the development direction of the roof (7), or even being arranged horizontal.

11. The infrastructure of claim 10, wherein the infrastructure (1) comprises a plurality of actuators, at least one for each solar panel (3), and wherein the infrastructure (1) comprises a plurality of guides (13) in particular at least one and preferably two for each solar panel (3), which guides (13) are parallel to one another and active on two respective opposite sides of the solar panel (3).

12. The infrastructure of any one of preceding claims 10 or 11, comprising:
a control unit (15) connected to the actuator and configured such as to command activation of the actuator, and, alternatively, or in combination,
at least a sensor (16) configured such as to emit a control signal, the control signal being received by the control unit (15) which determines, according to the control signal, a displacement of the solar panels (3) into the various operating conditions and the rest condition, the sensor being for example a presence sensor of light or solar radiation; and/or
a timer for establishing a time in which the solar panels (3) remain in the working operating condition and/or rest condition, the control unit (15) being configured such as to enable programmability of the movement of the solar panels (3) from the working operating condition to the rest condition by setting the timer.

13. The infrastructure of any one of the preceding claims, comprising at least a circuit (17) which is external of the solar panels (3) for transfer of energy along a predetermined path and in communication with the solar panels (3), the circuit (17) being destined to collect a part of the energy absorbed by the solar panels (3) and transfer the energy along the path to at least a user (18) where the energy can be collected and used, the infrastructure in particular further comprising at least an energy transfer device (19) arranged on the circuit (17) configured such as to receive the energy absorbed by the solar panels (3), the energy transfer device (19) being further configured to transfer a part of the solar energy absorbed by the solar panels (3) and to send the said solar energy to a plurality of users (18).

14. The infrastructure of claim 13, wherein the solar panels (3) are thermal solar panels, and wherein the circuit (17) comprises a primary hydraulic circuit which sets the thermal solar panels (3) in fluid communication with the energy transfer device (19) and further comprises a secondary hydraulic circuit independent of the primary hydraulic circuit for setting the energy transfer device (19) in fluid communication with the users (18).

15. The infrastructure of the preceding claim, wherein the energy transfer device (19) is a heat exchanger configured such as to receive, via the primary hydraulic circuit, a high-temperature fluid heated by the solar panels (3) and for transferring heat to a different fluid, for example water, contained in the secondary hydraulic circuit with the aim of distributing the fluid to the users (18).
